**Europäisches Patentamt**

**European Patent Office**

**Office européen des brevets**

(19)

(11) Veröffentlichungsnummer : **0 347 486 B1**

# EUROPÄISCHE PATENTSCHRIFT

(12)

(45) Veröffentlichungstag der Patentschrift :
**24.07.91 Patentblatt 91/30**

(51) Int. Cl.⁵ : **B60J 1/20**, B60R 13/07

(21) Anmeldenummer : **88110086.1**

(22) Anmeldetag : **24.06.88**

(54) Versenkbare Einrichtung an Fahrzeugen zur Aufnahme und Ableitung von Wasser.

(43) Veröffentlichungstag der Anmeldung :
**27.12.89 Patentblatt 89/52**

(45) Bekanntmachung des Hinweises auf die
Patenterteilung :
**24.07.91 Patentblatt 91/30**

(84) Benannte Vertragsstaaten :
**ES FR GB IT**

(56) Entgegenhaltungen :
**EP-A- 0 140 222**
**EP-A- 0 347 485**
**DE-A- 3 119 358**
**DE-C- 3 426 814**
**FR-A- 2 140 354**
**US-A- 4 201 412**

(73) Patentinhaber : **AUDI AG**
**Auto-Union-Strasse 1 Postfach 220**
**W-8070 Ingolstadt (DE)**

(72) Erfinder : **Piech, Ferdinand**
**Gerolfingerstrasse 128**
**W-8070 Ingolstadt (DE)**

(74) Vertreter : **Engelhardt, Harald**
**AUDI AG Patentabteilung Postfach 220**
**W-8070 Ingolstadt (DE)**

EP 0 347 486 B1

**Beschreibung**

Die Erfindung bezieht sich auf eine Wasserfangeinrichtung für Fahrzeuge, gemäß den Oberbegriffen der Patentansprüche 1 und 2.

Aus der DE-C-30 48 889 ist eine Wasserfangeinrichtung mit einer Wasserfangleiste bekannt, welche in funktionsfähiger Stellung seitlich entlang der Windschutzscheibe eines mit einem Scheibenwischer ausgerüsteten Fahrzeuges verläuft und welche in eine nicht funktionsfähige Stellung bewegbar ist, in der sie die Außenkontur des Fahrzeuges nicht überragt. Die Bewegung der Wasserfangleiste erfolgt in Abhängigkeit vom Ein- bzw. Ausschalten der Scheibenwischer, wobei durch das Einschalten der Scheibenwischer das Herausbewegen der Wasserfangleiste ausgelöst wird. Während der übrigen Zeit, welche gewöhnlich den größeren Anteil ausmacht und während der auch die gefahrenen Geschwindigkeiten größer sind, wird der Luftwiderstand durch die Wasserfangleiste nicht beeinträchtigt.

Aus der DE-A-34 31 912 ist eine Wasserfangeinrichtung mit einer parallel zu einem Dachholm über dem zugeordneten Türausschnitt angeordnete Wasserfangleiste bekannt. Diese Wasserfangleiste wird selbsttätig ausgefahren, wenn die Fahrzeugtüre geöffnet wird. Dadurch wird vom Dach abtropfender Regen oder Schnee aufgefangen und gegebenenfalls abgeleitet. Derartige Einrichtungen können besonders vorteilhaft bei Fahrzeugen eingesetzt werden, welche ohne eine Regenrinne im Dachbereich ausgeführt sind und deren oberer Türbereich in Richtung auf das Fahrzeugdach eingezogen ist. Derartige Ausbildungen finden sich zunehmend in Fahrzeugen jüngerer Bauart, welche in Hinblick auf einen reduzierten Luftwiderstandsbeiwert konstruiert sind.

Der Erfindung liegt die Aufgabe zugrunde, derartige Wasserfangeinrichtungen in Hinblick auf eine verbesserte Funktionssicherheit und erhöhte Lebensdauer weiterzubilden.

Die Aufgabe wird durch die kennzeichnenden Merkmale der Patentansprüche 1 und 2 gelöst.

Dadurch, daß die Außentemperatur erfaßt wird und das Herausbewegen der Wasserfangleiste nach Maßgabe der gemessenen Temperatur nur bei Temperaturen über dem Gefrierpunkt von Wasser erfolgt, wird die Wasserfangeinrichtung bei Minustemperaturen nicht aktiviert, selbst wenn der Scheibenwischer — z. B. zum Wegwischen von Schnee — eingeschaltet oder die Fahrzeugtüre geöffnet wird. Durch die Abhängigkeit von einem zweiten Parameter, nämlich der Temperatur, wird die Wasserfangeinrichtung wesentlich verbessert. Sie wird zum einen nur dann betätigt, wenn sie tatsächlich erforderlich ist. Zum anderen werden die Funktionssicherheit und die Lebensdauer der Wasserfangeinrichtung wesentlich erhöht. Bei den bekannten Einrichtungen, bei denen die Steuerung nur über den Scheibenwischer bzw.

den Zustand der Fahrzeugtüre erfolgt, wird die Wasserfangleiste bei Minustemperaturen und Vereisung gewaltsam in ihre Wirkstellung bewegt. Daß dabei die Betätigungsmittel, die Wasserfangleiste selbst oder daran anschließende Fahrzeugteile beschädigt werden können, liegt auf der Hand. Selbst wenn die Einrichtung dadurch nicht ausfällt, so wird ihre Lebensdauer doch erheblich reduziert. Eine Wasserfangleiste ist in ihren Abmessungen meist ein relativ schwach dimensioniertes Bauteil. Wenn dieses im Winterbetrieb festfriert und gewaltsam bewegt wird, dann verschleißt es sehr stark oder nimmt nicht mehr zuverlässig die vorgesehene Stellung ein.

Der Gegenstand der Erfindung ist unabhängig von der gewählten Wasserfangeinrichtung ; er kann bei jeder Gattung von Wasserfangeinrichtungen in einer die Lebensdauer und Funktion erhöhenden Weise eingesetzt werden.

Besonders vorteilhaft ist, wenn die Steuerung der Wasserfangleiste in Abhängigkeit vom Betrieb des Scheibenwischers bzw. der Stellung der Türe und/ oder der Außentemperatur durch einen Schalter überbrückbar ist. Dadurch läßt sich die selbsttätige Steuerung in Ausnahmefällen manuell beeinflussen. Beispielsweise kann es zweckmäßig sein, bei extremen Winterbedingungen, deren zufolge auch nur geringe Fahrtgeschwindigkeiten möglich sind, die Wasserfangleiste stets in ihrer ausgefahrenen Stellung zu belassen.

**Patentansprüche**

1. Wasserfangeinrichtung für Fahrzeuge, mit einer seitlich der Windschutzscheibe angeordneten Wasserfangleiste, welche beim Einschalten der Scheibenwischer aus ihrer gegenüber der Außenkontur des Fahrzeuges nicht vorstehenden Ruhestellung in eine wasseraufnehmende und abführende Wirkstellung herausbewegt wird, **dadurch gekennzeichnet,** daß am Fahrzeug eine Vorrichtung zur Erfassung der Außentemperatur vorgesehen ist und das Herausbewegen der Wasserfangleiste nach Maßgabe der gemessenen Temperatur nur bei Temperaturen über dem Gefrierpunkt von Wasser oder einer Wasser-Salz-Lösung erfolgt.

2. Wasserfangeinrichtung für Fahrzeuge, mit einer parallel zu einem Dachholm über dem zugeordneten Türausschnitt angeordneten Wasserfangleiste, welche beim Öffnen der Türe aus einer Ruhestellung, in der sie nicht gegenüber den umgebenden Karosserieteilen vorsteht, in die Wirkstellung herausbewegt wird, **dadurch gekennzeichnet,** daß am Fahrzeug eine Vorrichtung zur Erfassung der Außentemperatur vorgesehen ist und das Herausbewegen der Wasserfangleiste nach Maßgabe der gemessenen Temperatur nur bei Temperaturen über dem Gefrierpunkt von Wasser oder einer Wasser-Salz-Lösung erfolgt.

3. Wasserfangleiste nach Anspruch 1 oder 2, **dadurch gekennzeichnet**, daß die Steuerung der Wasserfangleiste in Abhängigkeit vom Betrieb des Scheibenwischers bzw. der Stellung der Türe und/ oder der Außentemperatur durch einen Schalter überbrückbar ist.

## Claims

1. Water-catching device for vehicles, with a water-catching strip positioned at the side of the windscreen which, when the wiper is switched on, is moved out from its inoperative position, from which it does not project beyond the external contour of the vehicle, into an operative position for catching and drawing off the water, characterized in that a device for measuring the outside temperature is provided on the vehicle, and the outward movement of the water-catching strip takes place in accordance with the measured temperature only at temperatures above the freezing point of water or of a water-salt solution.

2. Water-catching device for vehicles, with a water-catching strip positioned parallel to a roof member above the associated door opening which, when the door is opened, is moved out from an inoperative position, in which it does not project beyond the surrounding parts of the bodywork, into the operative position, characterized in that a device for measuring the outside temperature is provided on the vehicle, and the outward movement of the water-catching strip takes place in accordance with the measured temperature only at temperatures above the freezing point of water or of a water-salt solution.

3. Water-catching strip according to Claims 1 or 2, characterized in that the control of the water-catching strip as a function of the operation of the wiper or of the position of the door and/of or the outside temperature can be overridden by a switch.

## Revendications

1. Dispositif d'arrêt et d'évacuation de l'eau pour véhicules automobiles, comportant une baguette d'arrêt et d'évacuation de l'eau qui est disposée latéralement par rapport au pare-brise et qui est sortie lors de la mise en marche des essuie-glaces, à partir de sa position de repos non saillante par rapport au profil extérieur du véhicule, dans une position active de captation et d'évacuation de l'eau, caractérisé en ce qu'il est prévu, sur le véhicule, un dispositif propre à détecter la température extérieure, et en ce que la sortie de la baguette d'arrêt et d'évacuation de l'eau ne se produit, en fonction de la température mesurée, qu'à des températures supérieures au point de congélation de l'eau ou d'une solution de sel dans l'eau.

2. Dispositif d'arrêt et d'évacuation de l'eau pour véhicules automobiles, comportant une baguette d'arrêt et d'évacuation de l'eau qui est disposée parallèlement à un longeron de toit au-dessus de l'ouverture de porte associée et qui est sortie en position active à partir d'une position de repos dans laquelle elle ne fait pas saillie par rapport aux éléments de carrosserie qui l'entourent, caractérisé en ce qu'il est prévu, sur le véhicule, un dispositif propre à détecter la température extérieure, et en ce que la sortie de la baguette d'arrêt et d'évacuation de l'eau ne se produit, en fonction de la température mesurée, qu'à des températures supérieures au point de congélation de l'eau ou d'une solution de sel dans l'eau.

3. Dispositif d'arrêt et d'évacuation de l'eau selon la revendication 1 ou 2, caractérisé en ce que la commande automatique de la baguette d'arrêt et d'évacuation de l'eau en fonction du fonctionnement de l'essuie-glace ou de la position de la porte et/ou de la température extérieure peut être court-circuitée par un commutateur.